(19) Europäisches Patentamt
European Patent Office
Office européen des brevets

(11) **EP 1 196 239 B1**

(12) **EUROPEAN PATENT SPECIFICATION**

(45) Date of publication and mention
of the grant of the patent:
**23.04.2003 Bulletin 2003/17**

(21) Application number: **00939900.7**

(22) Date of filing: **15.06.2000**

(51) Int Cl.⁷: **B01J 19/00**, B29B 7/00,
G01N 29/02

(86) International application number:
**PCT/US00/16521**

(87) International publication number:
**WO 00/076656 (21.12.2000 Gazette 2000/51)**

(54) **PROCESS AND APPARATUS FOR PREPARING A COMPOSITION OF MATTER UTILIZING AN ULTRASONIC DEVICE**

VERFAHREN UND VORRICHTUNG ZUR HERSTELLUNG EINER MATERIALZUSAMMENSETZUNG UNTER VERWENDUNG EINES ULTRASCHALLGERÄTES

PROCEDE ET APPAREIL UTILISES POUR PREPARER UNE COMPOSITION DE MATIERE AU MOYEN D'UN DISPOSITIF A ULTRASONS

(84) Designated Contracting States:
**AT BE CH CY DE DK ES FI FR GB GR IE IT LI LU MC NL PT SE**

(30) Priority: **15.06.1999 US 139281 P**

(43) Date of publication of application:
**17.04.2002 Bulletin 2002/16**

(73) Proprietor: **DOW GLOBAL TECHNOLOGIES INC.
Midland, Michigan 48674 (US)**

(72) Inventor: **MAYNARD, Shawn, J.
Angleton, TX 77515 (US)**

(74) Representative: **Casalonga, Axel et al
BUREAU D.A. CASALONGA - JOSSE
Paul-Heyse-Strasse 33
80336 München (DE)**

(56) References cited:
GB-A- 673 447          GB-A- 1 346 095
US-A- 3 811 318        US-A- 4 327 587
US-A- 4 559 810

**EP 1 196 239 B1**

## Description

This invention relates to a chemical plant and to a process and apparatus for controlling chemical processes in a chemical plant. More specifically, the present invention relates to a process and apparatus for controlling the reaction process of a composition of matter such as a solid epoxy resin product, for example by controlling certain parameters such as epoxy equivalent weight, molecular weight, molecular weight distribution, or viscosity of the solid epoxy resin product.

A prominent method for controlling the process of polymerizing monomers or oligomers into higher oligomers or polymers involves sampling and off-line measuring polymer properties, such as epoxy equivalent weight, phenolic OH, or viscosity. These off-line measurement results, in combination or separately, are then used as the variables by which the entire process is controlled.

These off-line measurements are time consuming, expensive, and require material to be removed from the process. Process constraints may prohibit the sampling of material and the time requirements for obtaining the measurements are long enough to make controlling the process by these off-line methods problematic and prohibit process automation.

A need exists for an on-line technology that enables process automation by providing real-time, efficient, and precise polymer measurements that can be used as process control parameters.

Repetitious sampling and analytical measurements applied to a chemical production process present several significant potential problems.

First, there is inherent danger of removing a sample from a hot process stream, especially when the stream is viscous as in a polymer-forming process. Large insulated valves must be opened to allow material to flow into a small sample container. It is not uncommon for sampling ports in polymer lines to become partially plugged, causing the hot material to be unpredictably expelled from the opening.

Second, the procedure of removing a sample may alter the sample constitution. For example, the material removed from the line may only be partially converted and continue to react in the sample container after it is removed from the line. Furthermore, as the sampled material is viscous, it clings to the sample port valve, which may cause the current sample to be intermixed with remnants of previously acquired samples.

Third, the sampling and analysis procedure is time consuming. Many hundred or thousands of pounds of material can be produced in the time required to remove, prepare, and analyze a sample. The analytical data obtained from the sample is therefore of limited value for proactive process control.

Finally, because of the difficulties and cost associated with the hazards of sample removal, analytical sampling is typically infrequent. With minimal analytical data points, it is difficult to gain a statistically valid understanding of process variations or to make proper control adjustments to the process.

A preferred analysis method would monitor the material as it is being produced. Such a method would reduce the need to remove samples from the production environment, diminish the safety concerns, and facilitate more frequent and faster measurements.

There are, however, challenging obstacles that prevent most analytical techniques from providing in situ, on-line chemical constitution information in a process environment. First, the analytical method must be capable of accurately determining the desired properties with sufficient precision. Second, the analytical instrument must either be capable of withstanding the physical environment of a processing area or must be capable of sensing the desired composition properties from a remote location. Third, the interface of the instrumentation with the process must be able to survive the harsh pressure and temperature environment found inside the chemical process lines. Fourth, turbidity, bubbles and other common processing phenomena must not disturb the analytical measurements.

It is therefore desired to provide a process and apparatus that will overcome all of the above obstacles of the prior art methods and apparatuses.

One aspect of the present invention is directed to a process for on-line monitoring and control of a process plant having a plurality of steps producing a product with a property P having a desired value D including (a) on-line measuring at least one property P of the product by propagating an ultrasonic wave through said product, (b) comparing the product property P to a desired predetermined property D, and (c) in view of the result of the measurement made in step (a) and the comparison made in step (b), controlling the preparation of the product by controlling certain process parameters.

Another aspect of the present invention is directed to an apparatus for on-line monitoring and control of a process plant having a plurality of steps producing a product with a property P having a desired value D including (a) an ultrasonic means adapted for propagating an ultrasonic wave through said product and for on-line measuring at least one property P of the product, (b) a means for comparing the product property P to a desired predetermined property D, and (c) a means for controlling the preparation of the product by controlling certain process parameters based on measurement data made by the ultrasonic means of (a) and comparison data made by the comparison means of (b).

Still another aspect of the present invention is directed to a process for preparing a composition of matter comprising the steps of:

(a) feeding one or more components of a composition of matter into a continuous reactor,

(b) preparing a composition of matter from the one or more components in the reactor,

(c) measuring at least one property of the composition of matter by propagating an ultrasonic wave through said composition of matter, and

(d) in view of the result of the measurement made in step (c), controlling the preparation of the composition of matter within the reactor.

Yet another aspect of the present invention is directed to an apparatus for preparing a composition of matter comprising:

(a) a means for feeding one or more components of a composition of matter into a continuous reactor,

(b) a continuous reactor for preparing a composition of matter from the one or more components in the reactor,

(c) an ultrasonic wave means for measuring at least one property of the composition of matter by propagating an ultrasonic wave through said composition of matter, and

(d) a means for controlling the preparation of the composition of matter within the reactor based on the result of the measurement made by the ultrasonic wave means of (c).

Figure 1 is a simplified flow diagram of a plant for manufacturing a resinous material.

Figure 2 is a front view, partly in cross-section, illustrating the ultrasonic analyzer system used in the present invention.

Figure 3 is a side view taken along line 3-3 of Figure 2.

In general, the process of the present invention comprises an on-line monitoring and control process for a chemical plant having a plurality of steps producing a product with a property P having a desired value D utilizing an ultrasonic waves means for measuring a property P of the product and then based on the measurement controlling certain parameters of the process to obtain the desired value D of the product.

Generally, the process of the present invention is directed to controlling a reaction process for producing a product. The product may be any chemical product and preferably is a resinous material; and more preferably, the resinous material is a polymer resin.

The polymer resin useful in the present invention is preferably prepared by polymerizing one or more monomers and/or oligomers to form the polymer. As will be described below the polymer resin is preferably prepared in a continuous reactor extruder.

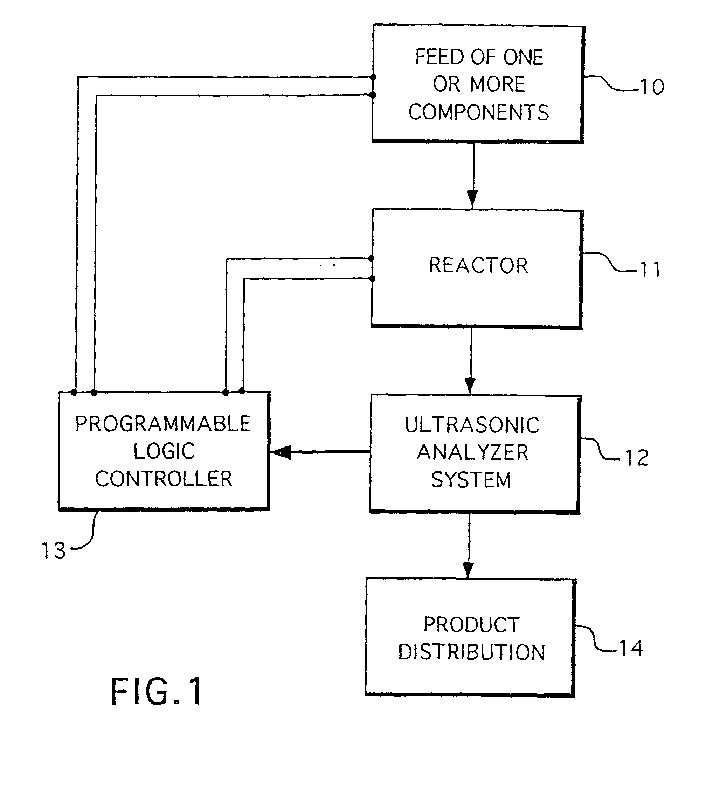

The present invention is best understood by reference to the accompanying Figures 1-3 illustrating the preferred embodiments of the present invention.

Figure 1 illustrates one embodiment of the present invention and shows a simplified flow chart of a manufacturing process for the production of a resinous product such as an epoxy resinous product. A resinous product, such as an epoxy resin, is typically manufactured by reacting epoxy monomers or oligomers to higher oligomers or polymers by action of a nucleophilic agent.

The process, shown in Figure 1 is typically performed by blending or mixing one or more components as a feed stream 10 to a mixing vessel or reactor 11. For example, epoxy monomers or oligomers with a nucleophic agent, a catalyst and, optionally, other additives or chain-terminating agents are fed into the reactor vessel 11. The mixture is typically heated in the reactor 11 and allowed to react for a period of time, until the desired product properties are achieved. In one embodiment, the product may be purified by a purifying means (not shown). The product from reactor 11 is passed through an ultrasonic analyzer system 12 for measuring the product's final properties. Then the measured signal from the analyzer 12 is sent to a programmable logic controller 13 or a personal computer to control the feed conditions and/or reaction conditions to ultimately control the properties of the product. The product can then be either delivered to another process for further modification, or transformed into a solid form for final distribution and/or sales as shown in 14.

The final product properties are compared to the desired product properties to adjust product parameters in 13, as illustrated in Figure 1, with the control loop in order to maintain the desired product properties. Also, the final product property measurements may be stored for statistical quality control records.

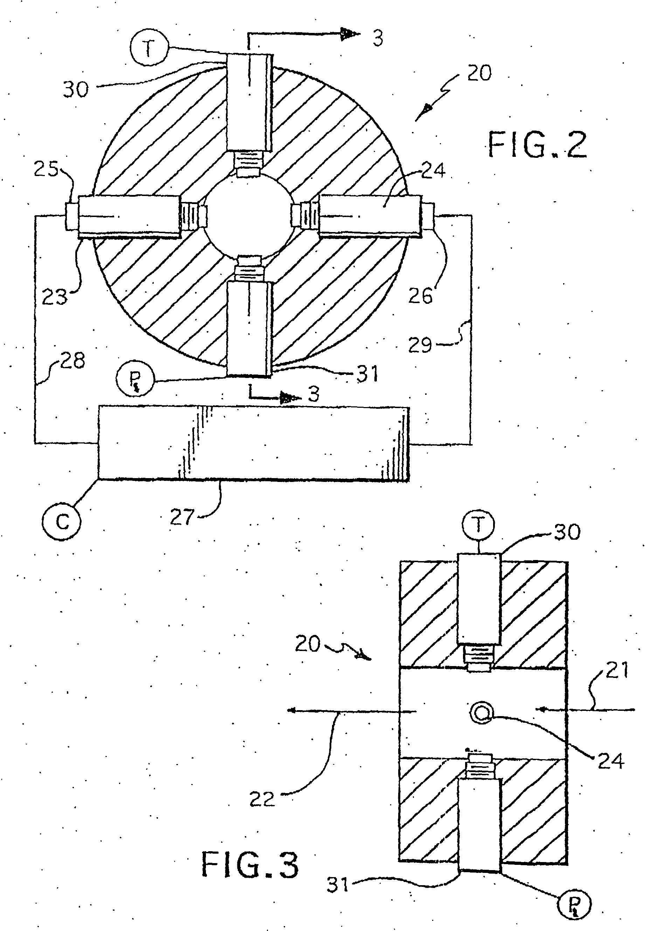

In operation, the ultrasonic analyzer system 12 (also generally indicated as numeral 20 in Figures 2 and 3) propagates ultrasonic pulses through a product that is located between two surfaces in a direction normal to the flow. The ultrasonic pulses have duration such as to prevent successive echoes from overlapping with one another while reverberating between the two surfaces. The surface that the sound emanates from initially is the transmitter and the other surface is the receiver. The ultrasonic sound propagates from the transmission surface through the product and into the receiver surface, generating the through transmission signal ($A_0$). The first echo signal ($A_1$) is generated when the sound reflects off the receiver surface back into the product, reflecting off the transmission surface back into the product, and into the receiver surface.

Depending on the product, this reverberation process may continue, generating successive echo signals ($A_2$, $A_3$...). The delay time between two successive signals is continuously monitored to provide output signals representative of the product ultrasonic velocity. The amplitude difference between two successive signals is continuously monitored to provide output signals representative of the product ultrasonic attenuation. At the same time the temperature and pressure of the product is continuously monitored to provide output signals representative of the product temperature and pressure. These output signals are processed as a function of time to generate quantitative information relating to the product properties, *P*. This product property is compared to the desired property, *D*, to control process parameters.

Figures 2 and 3 illustrate an ultrasonic analyzer system generally indicated as numeral 20 (numeral 12 in Figure 1) useful in the present invention for on-line monitoring of a flow stream in a manner that enables a prediction of the properties of the finished product. This prediction is, in turn, used to manipulate the inputs and the operating conditions of plant equipment to obtain finished products with the desired properties.

With reference to Figures 2 and 3, the ultrasonic analyzer system 20 is generally mounted so as to monitor a product flow stream, for example an epoxy resin, in the flow stream of the present process. In one embodiment of the present invention, the mounting of the ultrasonic analyzer system may be done at the product output stream of the reactor 11 or may be mounted on the reactor itself. In another embodiment, it may be desirous to first purify the product stream from the reactor before measuring the product stream properties with the ultrasonic analyzer system of the present invention. In this case the analyzer 20 is positioned at the output stream of a purification step in the process. At the output of the purification, the measurements are used to determine, for example, the epoxy equivalent weight, molecular weight, molecular weight distribution, viscosity, or melt index of the epoxy product. Flow into and out of the ultrasonic analyzer 20 is indicated by numerical references 21 and 22, respectively.

In one preferred embodiment of the present invention, the ultrasonic analyzer system 20 comprises a transmission buffer rod 23, a receiver buffer rod 24, a transmission ultrasonic transducer 25, a receiver ultrasonic transducer 26 and a ultrasonic analyzer assembly 27 with electrical leads 28 and 29 from the transducers 25 and 26, respectively. The ultrasonic analyzer system 20 also preferably includes a temperature measurement device 30 and a pressure measurement device 31.

In a preferred embodiment, the ultrasonic analyzer assembly 27 includes cables, a pulser, a receiver, a waveform digitizer, a signal processor, a data processor, and a process computer, not shown, which are well known to those skilled in the art.

In a typical application a pulser from the assembly 27 sends out a ultrasonic pulse to the transducer 25 where the electronic signal is transformed into a mechanical ultrasonic sound wave emanating from the transducer 25 and into the transmission buffer rod 23, traveling down the buffer rod 23 and into the product flow stream, where it is transmitted into the receiver buffer rod 24, and then transformed back into an electronic signal at the receiver ultrasonic transducer 26, where it is transmitted back to the ultrasonic analyzer assembly 27 on a receiver channel. This analog signal is received, digitized, processed, and results in velocity and attenuation measurements C.

The propagating sound wave can be transmitted or reflected, generating the signals of interest ($A_1$, $A_2$, $A_3$...) from which the measurements of velocity and attenuation are made ($A_2 - A_1$, $A_3 -$ and $A_2$,), as described in U. S. Patent No. 5,433,112, particularly with reference to Figure 2. The delay time between two successive signals ($A_2 - A_1$, $A_3 - A_2$, etc.) is continuously monitored to provide output signals representative of the product ultrasonic velocity. The amplitude difference between two successive signals is continuously monitored to provide output signals representative of the product ultrasonic attenuation. These two acoustical measurements are for illustrative purpose only. Those knowledgeable in the art would recognize that other measurements could be also made using the signals described above. These additional measurements are intended to be within the scope of the present invention.

The instrumentation or analyzer system 20 also includes a temperature-measuring device 30 that comprises a probe that monitors the temperature of the product. The output of the temperature measurement device 30 is a temperature measurement T of the product temperature. The temperature measurement T is used by the process computer (not shown) as described below.

The instrumentation or analyzer system 20 also includes a pressure-measuring device 31 that comprises a probe that monitors the pressure of the product. The output of the pressure measurement device 31 is a pressure

measurement $P_1$ of the product pressure. The pressure measurement $P_1$ is used by the process computer (not shown) as described below.

In the preferred embodiment, the transmission buffer rod 23 and the receiver buffer rod 24 have very similar ultrasonic sound wave transmission characteristics. The maximum path length Is a function of the attenuating characteristics of the product and the transmisivity of the transmission buffer rod 23 and the receiver buffer rod 24.

The components of the ultrasonic analyzer system 20 including for example, the temperature measuring device 30, the pressure measuring device 31, buffer rods 23 and 24, ultrasonic transducers 25 and 26, and the ultrasonic analyzer assembly 25, are not discussed in great detail as these components would be familiar to those knowledgeable in the art.

The outputs C, T, and $P_1$ of the ultrasonic analyzer system 20 are transmitted to a computer that analyzes the measurements, as discussed below, and predicts the product properties that could be expect from the process. Difference between the predicted properties, P, and the desired properties of the product, D, are used to control the process parameters, also as discussed below.

The three measuring instruments that are disclosed herein, that is, the ultrasonic analyzer assembly 27, the temperature measurement device 30 and the pressure measurement device 31, are for illustrative purposes only. Those knowledgeable in the art would recognize that other measurements could be also made and that other measurement devices may be used. These additional measurements are intended to be within the scope of the present invention.

As described above, the propagating sound wave can be transmitted or reflected, generating the signals of interest ($A_1$, $A_2$, $A_3$...). These signals are amplified, digitized, and processed through a correlation procedure such as described in William H. Press et al., in Numerical Recipes, pages 381-416, to obtain data comprising ultrasonic velocity and attenuation values measured simultaneously as a function of time. By simultaneously monitoring the time delay between two successive echoes exiting from the polymer melt and the amplitude variations of the echoes, one can thus derive from the monitored signals ($A_1$, $A_2$, $A_3$...) absolute values of ultrasonic velocity and attenuation (C), as described in U.S. Patent No. 5,433,112.

These two acoustical measurements are for illustrative purpose only. Those knowledgeable in the art would recognize that other measurements could be also made using the signals described above. These additional measurements are Intended to be within the scope of the present invention.

As described above with reference to Figure 2 and Figure 3, the outputs C, T, and P, of the instrument assembly are used to predict the product properties that could be expected from the process. This is accomplished by used of a mathematical model that relates the measurements (velocity, attenuation, T, and $P_1$) to the product properties of interest, such as epoxy equivalent weight, molecular weight, molecular weight distribution, viscosity, or melts index of the resinous product. The measured product property P is sent electronically to a programmable logic controller 13 as described In Figure 1, where P is compared to the desired product properties D and the process parameters are changed to achieve the desired product properties.

With reference to Figure 1 again, the reactor 14 shown is preferably a continuous reactor with an inlet and an outlet. At least one or more reactant components are fed into the reactor 11 from a feeding means 10. A reaction occurs within the reactor and the reaction in the reactor is controlled with an ultrasonic control means 12. A product stream exits the reactor at the outlet of the reactor. The composition of matter prepared in the reactor, is generally a resinous material; and more specifically, the resinous material is a polymer resin.

The polymer resin useful in the present invention is preferably prepared by polymerizing one or more monomers and/or oligomers in the continuous polymerization reactor 11 to form the polymer. Typically, a catalyst may be added to the polymerization reaction mixture for the purpose of obtaining a specific type of resinous material, or a desired rate of conversion. The monomer(s), oligomer(s), and catalyst when desired, may, each separately or in groups of two or more, be fed to the polymerization reactor in one or more of the following forms: a liquid solution, a slurry, or a dry physical mixture. A slurry feed useful in the present invention is described in copending U.S. Patent Application, Attorney Docket No. 44646 1, entitled "Process And Apparatus For Preparing A Composition Using A Slurry Feed", filed by Peter Keillor, of even date herewith.

The resinous material from which a composition is prepared may be virtually any polymer or copolymer. The resinous material need not have any particular molecular weight to be useful as a component in the composition. The resinous material may have repeating units ranging from at least two repeating units up to those resinous materials whose size is measured in the hundreds or thousands or repeating units. Particular resinous materials that may be used in the methods of the present invention include for example, epoxy resins, polyesters, urethanes, acrylics and others as set forth in U.S. Patent No. 5,094,806.

The most preferred resinous materials useful in the present invention from among those listed above are epoxy resins and polyesters. Epoxy resins useful in the present invention, and materials from which epoxy resins may be prepared, are described in U.S. Patent No. 4,612,156. Polyesters useful in the present invention, and materials from which polyesters may be prepared, are described in Volume 12 of Encyclopedia of Polymer Science and Engineering, pages 1-313.

The resinous material useful in the present invention is prepared by using a continuous reactor 11. The continuous reactor 11 used for this purpose may be a pipe or tubular reactor, or an extruder. It is preferred to use an extruder. More than one such reactor may be used for the preparation of different resinous materials. Any number of reactors may be used in the present invention.

In the production of a resinous material, for example a polymer, to be used in the present invention, various conditions or parameters have an effect on the course of the polymerization reaction. Typical examples of these conditions or parameters are as follows: the rate of feed to the reactor of the monomer(s) and/or oligomer(s); the temperature at which the reaction occurs; the length of time during which the reaction occurs; and the degree to which the reactants are mixed or agitated during the reaction. The rate of feed of monomer(s) and/or oligomer(s) can be influenced, for example, by valve adjustment on a pressured line. The temperature at which the reaction occurs can be influenced, for example, by the direct heating or cooling of the monomer(s) and/or oligomer(s) or to the reactor itself. The length of time during which the reaction occurs can be influenced, for example, by the size of the reactor, such as the length of a pipe, tube or extruder, or the speed at which the reactants move into and out of the reactor, such as may result from the particular speed or design of an extruder screw, or the introduction of a pressurized inert gas into a pipe or tube. The degree to which the reactants are mixed or agitated during the reaction can be influenced, for example, by the size, shape and speed of blades or other mixing elements, by the presence of a static mixing element in a pipe or tube, or the speed of the screw in an extruder.

The quality of the composition, which may be prepared by the process of the present invention, is improved if the properties of the resinous material are known and maintained at a desired level. Typical examples of resinous material properties that may be analyzed for this purpose are viscosity, melt index, melt flow rate, molecular weight, molecular weight distribution, equivalent weight, melting point, glass transition temperature, density, specific gravity, and purity. For example, when an epoxy resin is used as a resinous material, it is desired that its viscosity be in the range of from 1 to 100,000 centipoise.

The analytical technique that is used to determine resinous material properties such as the foregoing includes ultrasonic wave energy utilizing ultrasonic instrumentation and control means such as the ultrasonic analyzer system 20 of the present invention.

The polymeric properties such as those mentioned above, may be maintained at a desired level by adjusting and/or maintaining one or more of conditions or parameters that have an effect on the course of the polymerization reaction. Typical examples of such conditions or parameters are discussed above. To determine the manner and extent to which polymerization conditions should be adjusted, however, the analytical technique must first be performed to determine to what extent, if any, the polymeric property differs from the desired level.

A particularly advantageous method of using polymeric property data in connection with the adjustment of polymerization conditions is to perform the analysis needed to determine the polymeric properties of interest while the polymerization reaction is in progress. This method involves performing the property analysis on polymer or copolymer that is actually inside the reactor.

Although it is possible to insert the required analytical instrument inside the reactor such that the polymer or copolymer swirls around the instrument, it is preferable to mount the instrument in the wall of the reactor such that the polymer or copolymer contacts the instrument simply as a result of the motion that the polymerizate ordinarily experiences in that vicinity of the reactor as the reaction progresses. It is also preferred to perform property analysis on the polymer prior to the point of its exit from the reactor.

After the polymeric property data has been obtained with respect to a polymer or copolymer that is inside the reactor, an adjustment in one or more conditions of the reaction may be made if necessary. An adjustment made on the basis of property data concerning a polymer or copolymer that is inside the reactor is more likely to achieve the desired change in the property in question than an adjustment in conditions made on the basis of property data concerning a sample that has been withdrawn from the reactor. Adjusting the conditions under which a polymer is prepared, in response to an analysis (as the polymer is being prepared) of the properties of the polymer resulting from those conditions, enables real-time control of the reaction by which the polymeric component of a blended composition is prepared.

The polymeric material needs to have specific physical and thermodynamic properties to be useful as a component in the composition. The reacting monomeric mixture as well as the polymeric material must be measured to achieve and maintain the physical and thermodynamic properties of the polymeric material. Sampling the material is a significant problem. This measurement could be made off-line by sampling the reacting monomeric mixture or polymeric material; however, this approach is less desirable than real-time on-line analysis of the reacting monomeric mixture and polymeric material. For example, off-line analyses are less accurate because the material continues to react after removal from the mixer, process streams are altered by side stream sampling techniques, and side stream sampling techniques tend to plug off due to the reacting monomeric mixture. Furthermore, the time it takes to perform the off-line analysis, is time that the process could potentially be operating outside of its "normal" range. On-line measurements of physical and thermodynamic properties are not burdened by these issues and real-time analysis eliminates the time lag between measurement observation and process response.

This on-line measurement is preferentially made by use of ultrasonic sound waves after propagation through the monomeric mixture or polymeric material. For example, acoustic sound waves are propagated through the monomers, monomeric mixture, or polymeric material where the acoustic characteristics (velocity, amplitude, frequency, or phase shift) are altered by interaction with such material. This change in acoustic character is related to the physical and thermodynamic properties of the monomers, reacting monomeric mixture, or polymeric material and gives rise to the measurement of such properties. These physical and thermodynamic property measurements constitute the process output of the ultrasonic device. These properties are achieved and maintained by means of controlling key process variables by using the process output from the ultrasonic device. The output of the ultrasonic device is used by the process control code, which decides which process variable(s) are altered and to what degree in order to maintain the physical and thermodynamic properties of the reacting monomeric mixture or polymeric material. For example, appropriate adjustments could be made to the mixing rate, reactor pressure, reactor temperature, monomer and/or catalyst feed temperatures, monomer and/or catalyst feed ratios, mixer design, or reactor design.

For example, when an epoxy resin is being made in the reactor, it is helpful to measure one or more properties such as viscosity, molecular weight or epoxy equivalent weight. If the property measured does not have a value within the desired range, an adjustment may be made to one or more of the conditions of polymerization such as the rate of feed of the reactants, the temperature at which the reaction occurs, or the length of the duration of the reaction. When the reaction is being conducted in a pipe or tubular reactor or an extruder, the length of the duration of the reaction may be controlled by regulating the force with which the reactants are moved through the reactor, for example, by regulating the force with which the reactants are originally fed to the reactor or by regulating the speed of the screw in an extruder.

When one or more properties of an epoxy resin such as viscosity, molecular weight, epoxy equivalent weight or content of contaminants is being measured, it is particularly useful to perform such measurements by the propagation of ultrasonic pulse through the epoxy resin. Methods for the use of ultrasonic pulses to measure the properties of polymers are described in U.S. Patent Nos. 4,754,645 and 5,433,112.

In another embodiment of the present invention, a composition comprising a mixture or a blend of two or more components may be prepared. For example, the resinous material prepared in the reactor 11, as one component of the final composition, may be combined with one or more other resinous materials or with one or more other ingredients or additives. The resinous material prepared in the reactor may be continuously conveyed from the reactor to a mixer (not shown) in fluid flow communication, through a connection between the reactor and the mixer. A preferred process and apparatus using a reactor in combination with a mixer is described in copending U.S. Patent Application, Attorney Docket No. 44646, entitled "Process And Apparatus For Preparing A Composition Using A Continuous Reactor And Mixer In Series", filed by Keillor et al., of even date herewith.

If more than one reactor is used, a connection is established between each reactor and the mixer. Optionally, a blended or compounded composition may be prepared by feeding the exit product stream from several reactors connected directly to a mixer in which the blended or compounded composition is prepared. A pipe or tubular joint is suitable for use as the means of making the connection between the reactor and the mixer.

The preferred type of mixer used in the present invention, is an extruder, particularly a twin-screw extruder but other types of mixers such as co-kneaders may be used as well.

As aforementioned, the composition may be prepared by compounding the resinous material with other components of a composition. The other components of the composition includes a number of other ingredients which may also include another resinous material, such as an epoxy or a polyester, or other resinous materials listed above. The remaining components of the composition may also include ingredients such as conventional additives for example hardeners for an epoxy resin (for example, dicyandiamide), fillers, pigments and stabilizers. Other additives as ingredients for the composition of the present invention are disclosed in U.S. Patent No. 5,416,148. Such additives may be incorporated as a liquid into the composition. After mixing the composition in the mixer, the composition is recovered in a form suitable for handling, such as in the form of a flake or pellet.

Example 1

A. Apparatus

The apparatus used in this Example 1 included a continuous reactor. The continuous reactor was a Krupp Werner-Pfleiderer ZSK-30 intermeshing, co-rotating, twin-screw extruder. The reactor extruder barrel had an internal diameter of 30 mm with a length to diameter ratio of 46.7. The barrel consisted of 9-barrel sections. A temperature controller was used to control the barrel temperature of each section. Attached to barrel 9 of the reactor extruder was a gear pump and divert valve. The ultrasonic analyzer system 20 shown in Figures 2 and 3 and described above was attached to the divert valve in a manner which ensured that 20 was completely full throughout the experiment.

B. Process

Diglycidyl ether of bisphenol A (EEW=184.9) and p,p'-bisphenol were rate added to zone 1 of the reactive extruder described above. The catalyst, dissolved in the diglycidyl ether feed was as an 85 percent solution in DOWANOL DM of ethyltri-p-tolylphosphonium acetate-acid complex. One mixture had the following ratios for the epoxy resin: 76.0 weight percent, bisphenol A: 24.0 weight percent, and catalyst: 550 parts per million (Sample 1).
The mixture was then fed to the 30-mm Krupp, Werner & Pfleiderer reactor extruder described above. The conditions of the Krupp Werner & Pfleiderer extruder were: 347°F (175°C) at the feed throat, 374°F (190°C) on the second barrel, 392°F (200°C) on the third and forth barrels, 347°F (175°C) on the fifth and sixth barrels, and 392°F (200°C) on barrels 7 through 9. Multiple step changes in the feeding ratios of diglycidyl ether of bisphenol A and p,p'-bisphenol were produced in order to obtain a series of resinous materials while characterizing the extrudate with the ultrasonic analyzer system 20 shown in Figures 2 and 3 as follows.

Sample 2: epoxy resin: 70.0 weight percent, bisphenol A: 30.0 weight percent, and catalyst: 650 parts per million;

Sample 3: epoxy resin: 67.8 weight percent, bisphenol A: 32.2 weight percent, and catalyst: 800 parts per million;

Sample 4: epoxy resin: 66.3 weight percent, bisphenol A: 33.7 weight percent, and catalyst: 1050 parts per million.

For each feed ratio of diglycidyl ether of bisphenol A and p,p'-bisphenol level, extrudate was sampled and characterized by standard methods for epoxide equivalent weight (titration) and molecular weight (GPC). The experimental ratios used varied the molecular weight from an Mn of 1,000 to an Mn of 2,600, and correspondingly from an EEW of 500 to and EEW of 1,700. The ultrasonic analyzer system results C shown in Figures 2 and 3 produced velocity, temperature, and pressure measurement data sets, obtained at a predetermined set rate of data acquisitions. These data were used to calculate the molecular weight of the extrudate. The known value of the molecular weight, determined by GPC, is shown in Table 1 to compare to the predicted molecular weight values using the ultrasonic analyzer system with very good correlation. The epoxide equivalent weight was calculated from the predicted molecular weight values using the known relationship between the known molecular weight value and the epoxide equivalent weight. As shown in Table 2, the known value correlates very well with the predicted epoxide equivalent weight values using the ultrasonic analyzer system.

Table I

| Comparison of a measured molecular weight and predicted molecular weight of an epoxy resin | | | | |
|---|---|---|---|---|
| | Sample 1 | Sample 2 | Sample 3 | Sample 4 |
| **Mn (GPC)** | 1010 | 1672 | 2170 | 2599 |
| Average | 2.86 | 32.97 | 19.93 | 45.22 |
| Standard Deviation Coefficient of Variance | 0.28 | 1.97 | 0.92 | 1.74 |
| **Mn (Ultrasonic)** | 1013 | 1521 | 2138 | 2511 |
| Average | 5.85 | 37.78 | 16.49 | 21.15 |
| Standard Deviation Coefficient of Variance | 0.58 | 2.48 | 0.77 | 0.84 |
| **Difference** | 2.76 | 150 | 31.4 | 87.9 |
| $\|X_{GPC} - X_{Ultra}\|$ | 0.27 | 8.98 | 1.45 | 3.38 |
| $\dfrac{\|X_{GPC} - X_{Ulta}\| * 100}{\text{Average Mn}_{GPC}}$ | | | | |

Table 2

| Comparison of a measured epoxy equivalent weight and predicted epoxy equivalent weight of an epoxy resin | | | | |
|---|---|---|---|---|
| | Sample 1 | Sample 2 | Sample 3 | Sample 4 |
| **EEW (Titration)** | 505 | 936 | 1305 | 1667 |
| Average | 16.81 | 2.33 | 13.73 | 51.54 |
| Standard Deviation Coefficient of Variance | 3.33 | 0.25 | 1.05 | 3.09 |

Table 2 (continued)

| Comparison of a measured epoxy equivalent weight and predicted epoxy equivalent weight of an epoxy resin | | | | |
|---|---|---|---|---|
| | Sample 1 | Sample 2 | Sample 3 | Sample 4 |
| **EEW (Ultrasonic)** | 491 | 840 | 1316 | 1626 |
| Average | 3.74 | 27.54 | 13.37 | 18.04 |
| Standard Deviation Coefficient of Variance | 0.76 | 3.28 | 1.02 | 1.11 |
| **Difference** | 13.4 | 95.7 | 11.4 | 41.0 |
| $\|X_{Titration} - X_{Ultra}\|$ | 2.65 | 10.22 | 0.87 | 2.46 |
| $\dfrac{\|X_{Titration} - X_{Ultra}\| * 100}{\text{Average } Mn_{GPC}}$ | | | | |

## Claims

1. A process for on-line monitoring and control of a process plant having a plurality of steps producing a product with a property P having a desired value D, comprising the steps of:

   (a) on-line measuring at least one property P of the product by propagating an ultrasonic wave through said product, such that a first output of velocity and alternation C, a second output of temperature T and a third output of pressure $P_1$ are obtained and analyzed to predict the property P.
   (b) comparing the product property P to a desired predetermined property D, and
   (c) in view of the result of the measurement made in step (a) and the comparison mode in step (b), controlling the preparation of the product by controlling certain press parameters.

2. A process for preparing a composition of matter comprising the steps of:

   (a) feeding one or more components of a composition of matter into a continuous reactor,
   (b) preparing a composition of matter from the one or more components in the reactor,
   (c) measuring at least one property P of the composition of matter by propagating an ultrasonic wave through said composition of matter, such that a first output of velocity and alternation C, a second output of temperature T and a third output of pressure $P_1$ are obtained and analyzed to predict the property P,
   (d) in view of the result of the measurement made in step (c), controlling the preparation of the composition of matter within the reactor.

3. The process of Claim 2 wherein the reactor is an extruder.

4. The process of Claim 2 wherein the composition of matter is a resinous material.

5. The process of Claim 4 wherein the resinous material is a polymer.

6. The process of Claim 5 wherein the polymer is ah epoxy.

7. A process for preparing a polymer comprising the steps of:

   (a) feeding one or more monomers and/or oligomers into a continuous reactor,

   (b) forming a polymer by polymerizing the one or more monomers and/or oligomers within the reactor,

   (c) measuring at least one property P of the polymer by propagating an ultrasonic wave through said polymer, such that a first output of velocity and alternation C, a second output of temperature T and a third output of pressure $P_1$ are obtained and analyzed to predict property P,

   (d) in view of the result of the measurement made in step (c), adjusting and/or maintaining at least one condition that affects the polymerization of the one or more monomer(s) and/or oligomer(s) within the reactor so as to control the resultant polymer, and

(e) recovering from the reactor the polymer prepared after the adjustment and/or maintenance of the condition performed in step (d).

**8.** The process of Claim 7 therein the reactor is an extruder.

**9.** The process of Claim 7 wherein the measurement step (c) is carried out during the polymerization of the one or more monomers and/or oligomers; and/or after the polymer is formed.

**10.** The process of Claim 7 wherein the polymer is an epoxy.

**11.** The process of Claim 7 wherein the property measured in step (c) is at least one member selected from the viscosity, melt index, melt flow rate, molecular weight, molecular weight distribution and epoxy equivalent weight.

**12.** The process of Claim 11 wherein the condition of the polymerization that is adjusted and/or maintained is at least one member selected from the: rate of feed of the monomer(s) and/or oligomer(s), catalyst concentration, stolchiometry, reaction temperature, rate of mixing, degree of mixing, rate of reaction and length of reaction time.

**13.** The process of Claim 11 wherein the property measured is viscosity.

**14.** The process of Claim 11 wherein the property measured is epoxy equivalent weight.

**15.** the process of Claim 7 including the step of determining the presence of a contaminant in the polymer prepared in step (b) by ultrasonic waves.

**16.** The process of Claim 15 wherein the extent of the presence of the contaminant in the polymer is quantified by ultrasonic waves.

**17.** An apparatus for on-line monitoring and control of a process plant having a plurality of steps producing a product with a property P having a desired value D comprising:

(a) an ultrasonic means for on-line measuring at least one property P of the product by propagating an ultrasonic wave through said product, such that a first output of velocity and alternation C, a second output of temperature T and a third output of pressure $P_1$ are obtained and analyzed to predict the property P,

(b) a means for comparing the product property P to a desired predetermined property D, and

(c) a means for controlling the preparation of the product by controlling certain process parameters based on the view of the result of the measurement made by the ultrasonic means in (a) and the comparison made by the comparison means in (b).

**18.** An apparatus for preparing a composition of matter comprising: .

(a) a means for feeding one or more components of a composition of matter Into a continuous reactor,

(b) a continuous reactor for preparing a composition of matter from the one or more components fed Into the reactor,

(c) an ultrasonic waves measuring means for measuring at least one property P of the composition of matter by propagation of ultrasonic waves through said product, such that a first output of velocity and alternation C, a second output of temperature T and a third output of pressure $P_1$ are obtained and analyzed to predict the property P, and

(d) a means for controlling the preparation of the composition of matter within the reactor based on the result obtained by the measurement means in (c).

**19.** An apparatus for preparing a polymer comprising:

(a) a means for feeding one or more monomers and/or oligomers into a continuous reactor,

(b) a continuous reactor for forming a polymer by polymerizing the one or more monomers and/or oligomers,

(c) an ultrasonic waves measuring means adapted for propagating ultrasonic waves through the polymer and for measuring at least one property P of the polymer, such that a first output of velocity and alternation C, a second output of temperature T and a third output of pressure $P_1$ are obtained and analyzed to predict the property P,

(d) a means for adjusting. and/or maintaining at least one condition that affects the polymerization of the one or more monomer(s) and/or oligomer(s) within the reactor based on the result obtained by the measurement means in (c), and

(e) a means for recovering from the reactor the polymer prepared after the adjustment and/or maintenance of condition is made by the means of (d).

20. The apparatus of Claim 19 wherein the reactor is an extruder.

21. The apparatus of Claim 19 wherein the measurement means of (c) Is adapted for measuring the at least one property of the polymer during the polymerization of the one or more monomers and/or oligomers; and/or after the polymer is formed.

22. The apparatus of Claim 19 wherein the property measured is at least one member selected from the viscosity, melt index, melt flow rate, molecular weight, molecular weight distribution and equivalent weight.

23. The apparatus of Claim 19 wherein the condition of the polymerization that is adjusted and/or maintained is at least one member selected from the : rate of feed of the monomer(s) and/or oligomer(s), catalyst concentration, stoichiometry, reaction temperature, rate of mixing, degree of mixing, rate of reaction and length of reaction time.

24. The apparatus of Claim 19 including an ultrasonic waves measuring means for determining the presence of a contaminant in the polymer.

25. The apparatus of Claim 24 wherein the ultrasonic waves measuring means is adapted for quantifying the presence of the contaminant in the polymer.

**Patentansprüche**

1. Verfahren zur dynamischen Überwachung und Steuerung einer Verarbeitungsanlage mit mehreren Schritten, die ein Produkt mit einer Eigenschaft P erzeugt, die einen Sollwert D aufweist, das die Schritte aufweist:

(a) dynamische Messung mindestens einer Eigenschaft P des Produkts durch Ausbreitung einer Ultraschallwelle durch das Produkt, so daß eine erste Ausgangsgröße der Geschwindigkeit und Dämpfung C, eine zweite Ausgangsgröße der Temperatur T und eine dritte Ausgangsgröße des Drucks $P_1$ erhalten und analysiert werden, um die Eigenschaft P vorherzusagen.
(b) Vergleichen der Produkteigenschaft P mit einer vorbestimmten Solleigenschaft D, und
(c) hinsichtlich des Ergebnisses der im Schritt (a) vorgenommenen Messung und des im Schritt (b) vorgenommenen Vergleichs, Steuern der Herstellung des Produkts durch Steuern bestimmter Verfahrensparameter.

2. Verfahren zur Herstellung einer Stoffzusammensetzung, das die Schritte aufweist:

(a) Zuführen einer oder mehrerer Komponenten einer Stoffzusammensetzung in einen kontinuierlichen Reaktor,
(b) Herstellen einer Stoffzusammensetzung aus der einen oder den mehreren Komponenten im Reaktor,
(c) Messung mindestens einer Eigenschaft P der Stoffzusammensetzung durch Ausbreitung einer Ultraschallwelle durch die Stoffzusammensetzung, so daß eine erste Ausgangsgröße der Geschwindigkeit und Dämpfung C, eine zweite Ausgangsgröße der Temperatur T und eine dritte Ausgangsgröße des Drucks $P_1$ erhalten und analysiert werden, um die Eigenschaft P vorherzusagen,
(d) hinsichtlich des Ergebnisses der im Schritt (c) vorgenommenen Messung, Steuern der Herstellung der Stoffzusammensetzung im Reaktor.

**3.** Verfahren nach Anspruch 2, wobei der Reaktor ein Extruder ist.

**4.** Verfahren nach Anspruch 2, wobei die Stoffzusammensetzung ein Harzmaterial ist.

**5.** Verfahren nach Anspruch 4, wobei das Harzmaterial ein Polymer ist.

**6.** Verfahren nach Anspruch 5, wobei das Polymer ein Epoxid ist.

**7.** Verfahren zur Herstellung eines Polymers, das die Schritte aufweist:

(a) Zuführen eines oder mehrerer Monomere und/oder Oligomere in einen kontinuierlichen Reaktor,
(b) Bilden eines Polymers durch Polymerisieren des einen oder der mehreren Monomere und/oder Oligomere im Reaktor,
(c) Messung mindestens einer Eigenschaft P des Polymers durch Ausbreitung einer Ultraschallwelle durch das Polymer, so daß eine erste Ausgangsgröße der Geschwindigkeit und Dämpfung C, eine zweite Ausgangsgröße der Temperatur T und eine dritte Ausgangsgröße des Drucks $P_1$ erhalten und analysiert werden, um die Eigenschaft P vorherzusagen,
(d) hinsichtlich des Ergebnisses der im Schritt (c) vorgenommenen Messung, Einstellen und/oder Aufrechterhalten mindestens einer Bedingung, die die Polymerisation des einen oder der mehreren Monomer(e) und/oder Oligomer(e) im Reaktor bewirkt, um das resultierende Polymer zu steuern, und
(e) Gewinnen des nach der im Schritt (d) durchgeführten Einstellung und/oder Aufrechterhaltung der Bedingung hergestellten Polymers aus dem Reaktor.

**8.** Verfahren nach Anspruch 7, wobei der Reaktor ein Extruder ist.

**9.** Verfahren nach Anspruch 7, wobei der Meßschritt (c) durchgeführt wird während der Polymerisation des einen oder der mehreren Monomere und/oder Oligomere und/oder nachdem das Polymer gebildet wird.

**10.** Verfahren nach Anspruch 7, wobei das Polymer ein Epoxid ist.

**11.** Verfahren nach Anspruch 7, wobei die im Schritt (c) gemessene Eigenschaft mindestens ein Glied ist, das aus der Viskosität, dem Schmelzindex, der Schmelzdurchflußgeschwindigkeit, dem Molekulargewicht, der Molekulargewichtsverteilung und dem Epoxid-Äquivalentgewicht ausgewählt wird.

**12.** Verfahren nach Anspruch 11, wobei die Bedingung der Polymerisation, die eingestellt und/oder aufrechterhalten wird, mindestens ein Glied ist, das aus der Zuführgeschwindigkeit des/der Monomer(e) und/oder Oligomer(e), der Katalysatorkonzentration, der Stöchiometrie, der Reaktionstemperatur, der Mischgeschwindigkeit, dem Mischgrad, der Reaktionsgeschwindigkeit und der Reaktionsdauer ausgewählt wird.

**13.** Verfahren nach Anspruch 11, wobei die gemessene Eigenschaft die Viskosität ist.

**14.** Verfahren nach Anspruch 11, wobei die gemessene Eigenschaft das Epoxid-Äquivalentgewicht ist.

**15.** Verfahren nach Anspruch 7, das den Schritt der Feststellung des Vorhandenseins eines Schmutzstoffs in dem in Schritt (b) hergestellten Polymer durch Ultraschallwellen aufweist.

**16.** Verfahren nach Anspruch 15, wobei das Ausmaß des Vorhandenseins des Schmutzstoffs im Polymer durch Ultraschallwellen quantitativ bestimmt wird.

**17.** Vorrichtung zur dynamischen Überwachung und Steuerung einer Verarbeitungsanlage mit mehreren Schritten, die ein Produkt produziert mit einer Eigenschaft P, die einen Sollwert D aufweist, die aufweist:

(a) eine Ultraschalleinrichtung zur dynamischen Messung mindestens einer Eigenschaft P des Produkts durch Ausbreitung einer Ultraschallwelle durch das Produkt, so daß eine erste Ausgangsgröße der Geschwindigkeit und Dämpfung C, eine zweite Ausgangsgröße der Temperatur T und eine dritte Ausgangsgröße des Drucks $P_1$ erhalten und analysiert werden, um die Eigenschaft P vorherzusagen,
(b) eine Einrichtung zum Vergleichen der Produkteigenschaft P mit einer vorbestimmten Solleigenschaft D, und
(c) eine Einrichtung zum Steuern der Herstellung des Produkts durch Steuerung bestimmter Verfahrensparameter beruhend auf dem Ergebnis der durch die Ultraschalleinrichtung in (a) vorgenommenen Messung und dem durch die Vergleichseinrichtung in (b) vorgenommenen Vergleich.

18. Vorrichtung zur Herstellung einer Stoff Zusammensetzung, die aufweist:

(a) eine Einrichtung zum Zuführen einer oder mehrerer Komponenten einer Stoffzusammensetzung in einen kontinuierlichen Reaktor,
(b) einen kontinuierlichen Reaktor zur Herstellung einer Stoffzusammensetzung aus einer oder mehreren Komponenten, die dem Reaktor zugeführt werden,
(c) eine Ultraschallwellen-Meßeinrichtung zur Messung mindestens einer Eigenschaft P der Stoffzusammensetzung durch Ausbreitung von Ultraschallwellen durch das Produkt, so daß eine erste Ausgangsgröße der Geschwindigkeit und Dämpfung C, eine zweite Ausgangsgröße der Temperatur T und eine dritte Ausgangsgröße des Drucks $P_1$ erhalten und analysiert werden, um die Eigenschaft P vorherzusagen, und
(d) eine Einrichtung zum Steuern der Herstellung der Stoffzusammensetzung im Reaktor beruhend auf dem durch die Meßeinrichtung in (c) erhaltenen Ergebnis.

19. Vorrichtung zur Herstellung eines Polymers, die aufweist:

(a) eine Einrichtung zum Zuführen einer oder mehrerer Monomere und/oder Oligomere in einen kontinuierlichen Reaktor,
(b) einen kontinuierlichen Reaktor zum Bilden eines Polymers durch Polymerisieren des einen oder der mehreren Monomere und/oder Oligomere,
(c) eine Ultraschallwellen-Meßeinrichtung, die zur Ausbreitung von Ultraschallwellen durch das Polymer und zur Messung mindestens einer Eigenschaft P des Polymers angepaßt ist, so daß eine erste Ausgangsgröße der Geschwindigkeit und Dämpfung C, eine zweite Ausgangsgröße der Temperatur T und eine dritte Ausgangsgröße des Drucks $P_1$ erhalten und analysiert werden, um die Eigenschaft P vorherzusagen,
(d) eine Einrichtung zum Einstellen und/oder Aufrechterhalten mindestens einer Bedingung, die die Polymerisation des einen oder der mehreren Monomer(e) und/oder Oligomer(e) im Reaktor bewirkt, beruhend auf dem durch die Meßeinrichtung in (c) erhaltenen Ergebnis, und
(e) eine Einrichtung zum Gewinnen des Polymers aus dem Reaktor, das hergestellt wird, nachdem die Einstellung und/oder das Aufrechterhaltung der Bedingung durch die Einrichtung vom (d) vorgenommen wird.

20. Vorrichtung nach Anspruch 19, wobei der Reaktor ein Extruder ist.

21. Vorrichtung nach Anspruch 19, wobei die Meßeinrichtung von (c) zur Messung der mindestens einen Eigenschaft des Polymers, während der Polymerisation des einen oder der mehreren Monomere und/oder Oligomere und/oder nachdem das Polymer gebildet ist, angepaßt ist.

22. Vorrichtung nach Anspruch 19, wobei die gemessene Eigenschaft mindestens ein Glied ist, das aus der Viskosität, dem Schmelzindex, der Schmelzdurchflußgeschwindigkeit, dem Molekulargewicht, der Molekulargewichtsverteilung und dem Äquivalentgewicht ausgewählt wird.

23. Vorrichtung nach Anspruch 19, wobei die Bedingung der Polymerisation, die eingestellt und/oder aufrechterhalten wird, mindestens ein Glied ist, das aus der Zuführgeschwindigkeit des/der Monomer(e) und/oder Oligomer(e), der Katalysatorkonzentration, der Stöchiometrie, der Reaktionstemperatur, der Mischgeschwindigkeit, dem Mischgrad, der Reaktionsgeschwindigkeit und der Reaktionsdauer ausgewählt wird.

24. Vorrichtung nach Anspruch 19, die eine Ultraschallwellen-Meßeinrichtung zur Feststellung des Vorhandenseins eines Schmutzstoffs im Polymer aufweist.

25. Vorrichtung nach Anspruch 24, wobei die Ultraschallwellen-Meßeinrichtung zur quantitativem Bestimmung des Vorhandenseins des Schmutzstoffs im Polymer angepaßt ist.

**Revendications**

1. Procédé permettant de surveiller et réguler en ligne le fonctionnement d'une installation où se déroule en plusieurs étapes la production d'un produit présentant une certaine propriété P pour laquelle on souhaite obtenir une certaine valeur D, et comportant les étapes suivantes :

a) mesurer en ligne au moins une propriété P du produit, en faisant se propager une onde ultrasonore à travers ledit produit, de manière à obtenir une première grandeur de sortie C (vitesse et atténuation), une deuxième grandeur de sortie T (température) et une troisième grandeur de sortie $P_1$ (pression) et à analyser ces grandeurs de sortie pour prévoir la valeur de la propriété P ;
b) comparer la valeur de la propriété P du produit avec la valeur prédéterminée D voulue pour cette propriété ;
c) et au vu des résultats des mesures effectuées dans l'étape (a) et de la comparaison faite dans l'étape (b), réguler la préparation du produit en réglant certains paramètres de procédé.

2. Procédé de préparation d'une composition de matière, comportant les étapes suivantes :

a) alimenter un réacteur continu en un ou plusieurs composants d'une composition de matière ;
b) préparer une composition de matière dans le réacteur, à partir de ce ou ces composants ;
c) mesurer au moins une propriété P de la composition de matière, en faisant se propager une onde ultrasonore à travers ladite composition de matière, de manière à obtenir une première grandeur de sortie C (vitesse et atténuation), une deuxième grandeur de sortie T (température) et une troisième grandeur de sortie $P_1$ (pression) et à analyser ces grandeurs de sortie pour prévoir la valeur de la propriété P ;
d) et au vu des résultats des mesures effectuées dans l'étape (c), réguler la préparation de la composition de matière dans le réacteur.

3. Procédé conforme à la revendication 2, dans lequel le réacteur est une extrudeuse.

4. Procédé conforme à la revendication 2, dans lequel la composition de matière est une matière résineuse.

5. Procédé conforme à la revendication 4, dans lequel la matière résineuse est un polymère.

6. Procédé conforme à la revendication 5, dans lequel le polymère est une résine époxyde.

7. Procédé de préparation d'un polymère, comportant les étapes suivantes :

a) alimenter un réacteur continu en un ou plusieurs monomères et/ou oligomères ;
b) former un polymère en faisant polymériser le ou les monomères et/ou oligomères dans le réacteur ;
c) mesurer au moins une propriété P du polymère, en faisant se propager une onde ultrasonore à travers ledit polymère, de manière à obtenir une première grandeur de sortie C (vitesse et atténuation), une deuxième grandeur de sortie T (température) et une troisième grandeur de sortie $P_1$ (pression) et à analyser ces grandeurs de sortie pour prévoir la valeur de la propriété P ;
d) au vu des résultats des mesures effectuées dans l'étape (c), ajuster et/ou maintenir au moins une condition affectant la polymérisation du ou des monomères et/ou oligomères dans le réacteur, de façon à réguler le polymère résultant ;
e) et récupérer dans le réacteur le polymère préparé, après l'ajustement et/ou le maintien de condition effectués dans l'étape (d).

8. Procédé conforme à la revendication 7, dans lequel le réacteur est une extrudeuse.

9. Procédé conforme à la revendication 7, dans lequel l'étape de mesure (c) est effectuée au cours de la polymérisation du ou des monomères et/ou oligomères, et/ou après la formation du polymère.

10. Procédé conforme à la revendication 7, dans lequel le polymère est une résine époxyde.

11. Procédé conforme à la revendication 7, dans lequel la propriété mesurée dans l'étape (c) est au moins l'une des suivantes : viscosité, indice de fluidité à chaud, masse moléculaire, distribution des masses moléculaires, et poids d'équivalent époxyde.

12. Procédé conforme à la revendication 11, dans lequel la condition de polymérisation ajustée et/ou maintenue est au moins l'une des suivantes : débit d'alimentation en monomères et/ou oligomères, concentration du catalyseur, stoechiométrie, température de réaction, vitesse de brassage, degré de brassage, vitesse de réaction et durée de réaction.

**13.** Procédé conforme à la revendication 11, dans lequel la propriété mesurée est la viscosité.

**14.** Procédé conforme à la revendication 11, dans lequel la propriété mesurée est le poids d'équivalent époxyde.

**15.** Procédé conforme à la revendication 7, qui comporte une étape consistant à déterminer, à l'aide d'ondes ultrasonores, la présence d'une impureté dans le polymère préparé dans l'étape (b).

**16.** Procédé conforme à la revendication 15, dans lequel on détermine, à l'aide d'ondes ultrasonores, la quantité d'impureté présente dans le polymère.

**17.** Appareillage permettant de surveiller et réguler en ligne le fonctionnement d'une installation où se déroule en plusieurs étapes la production d'un produit présentant une certaine propriété P pour laquelle on souhaite obtenir une certaine valeur D, et comportant les moyens suivants :

a) un moyen permettant de mesurer en ligne, à l'aide d'ondes ultrasonores, au moins une propriété P du produit, en faisant se propager une onde ultrasonore à travers ledit produit, de manière à obtenir une première grandeur de sortie C (vitesse et atténuation), une deuxième grandeur de sortie T (température) et une troisième grandeur de sortie $P_1$ (pression) et à analyser ces grandeurs de sortie pour prévoir la valeur de la propriété P ;
b) un moyen permettant de comparer la valeur de la propriété P du produit avec la valeur prédéterminée D voulue pour cette propriété ;
c) et un moyen permettant, au vu des résultats des mesures effectuées à l'aide d'ondes ultrasonores grâce au moyen (a) et de la comparaison effectuée grâce au moyen (b), de réguler la préparation du produit en réglant certains paramètres de procédé.

**18.** Appareillage permettant de préparer une composition de matière, comportant les moyens suivants :

a) un moyen permettant d'alimenter un réacteur continu en un ou plusieurs composants d'une composition de matière ;
b) un réacteur continu permettant de préparer une composition de matière, à partir du ou des composants introduits dans le réacteur ;
c) un moyen de mesure à ondes ultrasonores, permettant de mesurer au moins une propriété P de la composition de matière en faisant se propager une onde ultrasonore à travers ce produit, de manière à obtenir une première grandeur de sortie C (vitesse et atténuation), une deuxième grandeur de sortie T (température) et une troisième grandeur de sortie $P_1$ (pression) et à analyser ces grandeurs de sortie pour prévoir la valeur de la propriété P ;
d) et un moyen permettant, au vu des résultats obtenus avec le moyen de mesure (c), de réguler la préparation de la composition de matière dans le réacteur.

**19.** Appareillage permettant de préparer un polymère, comportant les moyens suivants :

a) un moyen permettant d'alimenter un réacteur continu en un ou plusieurs monomères et/ou oligomères ;
b) un réacteur continu permettant de former un polymère en faisant polymériser le ou les monomères et/ou oligomères ;
c) un moyen de mesure à ondes ultrasonores, adapté pour faire se propager une onde ultrasonore à travers le polymère et mesurer au moins une propriété P du polymère, de manière à obtenir une première grandeur de sortie C (vitesse et atténuation), une deuxième grandeur de sortie T (température) et une troisième grandeur de sortie $P_1$ (pression) et à analyser ces grandeurs de sortie pour prévoir la valeur de la propriété P ;
d) un moyen permettant, au vu des résultats obtenus avec le moyen de mesure (c), d'ajuster et/ou de maintenir au moins une condition affectant la polymérisation du ou des monomères et/ou oligomères dans le réacteur ;
e) et un moyen permettant de récupérer dans le réacteur le polymère préparé, une fois l'ajustement et/ou le maintien de condition effectués avec le moyen (d).

**20.** Appareillage conforme à la revendication 19, dans lequel le réacteur est une extrudeuse.

**21.** Appareillage conforme à la revendication 19, dans lequel la moyen de mesure (c) est adapté pour mesurer ladite ou lesdites propriétés du polymère au cours de la polymérisation du ou des monomères et/ou oligomères, et/ou après la formation du polymère.

**22.** Appareillage conforme à la revendication 19, dans lequel la propriété mesurée est au moins l'une des suivantes : viscosité, indice de fluidité à chaud, masse moléculaire, distribution des masses moléculaires, et poids d'équivalent.

**23.** Appareillage conforme à la revendication 19, dans lequel la condition de polymérisation ajustée et/ou maintenue est au moins l'une des suivantes : débit d'alimentation en monomères et/ou oligomères, concentration du catalyseur, stoechiométrie, température de réaction, vitesse de brassage, degré de brassage, vitesse de réaction et durée de réaction.

**24.** Appareillage conforme à la revendication 19, qui comporte un moyen de mesure à ondes ultrasonores permettant de déterminer la présence d'une impureté dans le polymère.

**25.** Appareillage conforme à la revendication 24, dans lequel le moyen de mesure à ondes ultrasonores est adapté pour pouvoir déterminer la quantité d'impureté présente dans le polymère.

FIG. 1

FIG.2

FIG.3